# EUROPEAN PATENT APPLICATION

(11) **EP 1 912 380 A1**
(43) Date of publication of application: **16.04.2008**
(21) Application number: 06291595.4
(22) Date of filing: 12.10.2006
(51) Int. Cl.: H04L 12/24, H04L 29/06

(54) **Method for controlling access to a network element**

(71) Applicant: Alcatel Lucent, 75008 Paris (FR)
(72) Inventor: Volonte', Stefano, 20052 Monza (Milano) (IT); Galantucci, Raffaele, 24041 Brembate (Bergamo) (IT); Cortese, Alfredo, 23892 Bulciago (Lecco) (IT); Tresoldi, Paola, 20040 Cambiago (Milano) (IT)
(74) Representative: Menzietti, Domenico

(57) **Abstract**

A method is disclosed for controlling access to a plurality of network elements (NE1, NE2, NE3) through a Network Management System (NMS). The method includes the steps of:
- receiving at the Network Management System a request for performing a specific configuration of a network element (NE1), wherein the request includes a user identifier;
- checking (NM Application) if the user identifier and corresponding right of the requested specific configuration is included into an information set (NMS-VACM) stored into the Network Management System, wherein the information set includes user identifiers and corresponding rights enabled to perform different types of configurations of at least one of the plurality of network elements; and
- in case of a positive check at the Network Management System, transmitting towards the network element (NE1) a message including a first field (msgData), wherein the first field indicates the request for performing the specific configuration.

## Description

### FIELD OF THE INVENTION

The present invention relates to the field of management of a telecommunications network and in particular to a method for controlling access to a plurality of network elements.

### BACKGROUND OF THE INVENTION

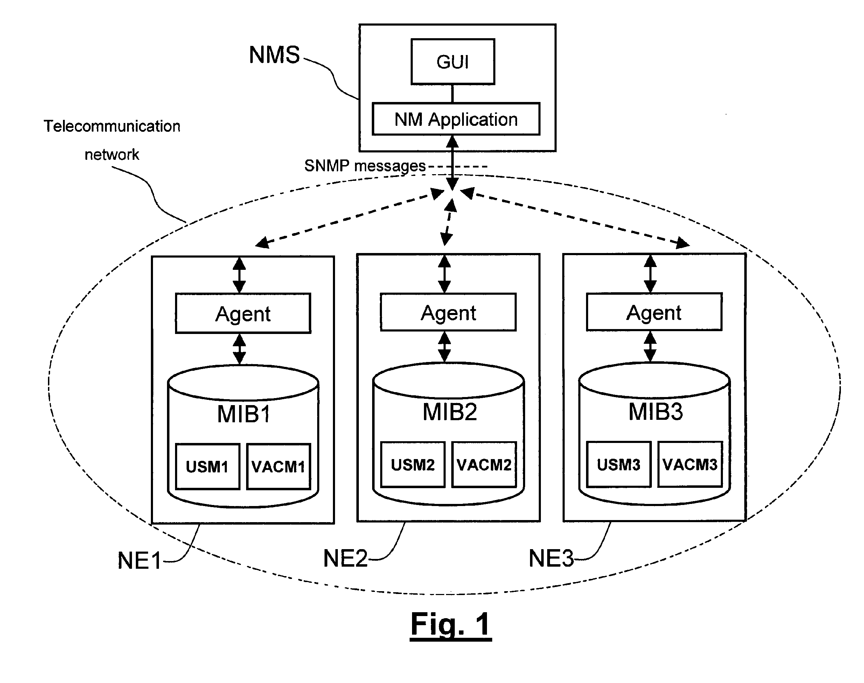

Network architectures are based on a Network Management System controlling a telecommunications network including a plurality of network elements. Referring to Fig.1, the Network Management System is indicated with NMS and the controlled network elements are indicated with NE1, NE2, NE3. Fig.1 schematically shows only three network elements, but the network can include a different number of a plurality of network elements. The Network Management System is connected to the controlled network elements through channels carrying management data in the same physical network carrying user data or through a different physical network carrying only management data.

The Network Management System includes a software application (indicated in Fig.1 with "NM Application", where NM stands for Network Management) running on hardware (for example, a processor of a personal computer, a workstation or a server) and performing configuration of the network elements, which includes configuration of network connections, monitoring alarms and performance of the connections, protection of the connections providing a backup connection in case of a fault on a segment of a nominal connection. The Network Management System further includes a Graphic User Interface (indicated in Fig.1 with GUI) for receiving from a network operator a request of for performing a specific configuration of a network element and for transmitting this request to the NM Application. Fig.1 shows the GUI included into the Network Management System NMS, but the GUI can also be external (and connected) to the Network Management System NMS.

The Network Management System performs the network elements configuration according to the model Network Management System - Agent - MIB. MIB stands for Management Information Base and it is a data structure (indicated with MIB1, MIB2, MIB3 for NE1, NE2, NE3 respectively) arranged into a hierarchical model and stored into each network element . The MIB defines groups and objects in the groups, the objects including object instances for managing the network element; for example, an object instance stores the number of bytes received from a network interface. The Network Management System transmits and receives messages to MIB of a network element according to a management protocol, like SNMP (Simple Network Management Protocol), Qx, Q3 or Qecc, for performing the network element configuration by reading and writing into the object instances of the MIB and consequently for reading and changing the status of the network element. The Agent is a software program running on a processor of a network element: it receives and elaborates the SNMP messages and afterwards it reads or writes the information stored into the MIB. The advantage of this architecture is a standard management protocol between the Network Management System and the Agent and a standard data structure of MIB, while the Network Management System and the Agent is specific for each network element.

Referring specifically to SNMP, actually three versions exist, referred as SNMPv1, SNMPv2 and SNMPv3 and defined in several RFC (Request for Comments). SNMPv1 is the first implementation of the SNMP protocol and it includes the basic operations for configuration of the network elements: Set, Get, Trap, Response, GetNext.

SNMPv2 is an enhancement of SNMPv1: SNMPv2 includes the new operations of GetBulk and Inform and it includes a weak authentication by defining a community: only Network Management Systems belonging to the same community can perform SNMP operations on network elements belonging this community.

SNMPv3 is an extension of the SNMP architecture for improving the network security, introducing a new message format, authentication and encryption of the messages, access control. Specifically, User Security Model (USM), described in RFC 3414, defines the mechanisms for performing authentication and encryption of the SNMP messages; this is performed in the network elements using a MIB (indicated in Fig.1 with blocks USM1, USM2, USM3 for NE1, NE2, NE3 respectively), which includes some tables. The Network Management System and the USM MIB in the network elements are configured by storing a list of the same user identifiers. According to RFC 3414, the user configuration is stored into the USM MIB into the table indicated with "usmUserTable".

The user can be an individual (or a group of individuals) acting in a particular role, like for example a network operator having tasks for administration or maintenance. The user can also be an application or a set of applications (or a combination of both). The user has an identifier (or a user-name), which is a human readable string.

View-based Access Control Module (VACM), described in RFC 3415, defines the mechanisms for performing control of access to MIB of a network element, that is if a user has the right to access to a part of the MIB and thus to a managed object or object instance in this part of the MIB. Access control is performed retrieving information stored into a MIB (indicated in Fig.1 with blocks VACM1, VACM2, VACM3 for NE1, NE2, NE3 respectively), which stores the rights of the user identifiers, that is which user can access which part of the MIB under specified conditions. Conditions include:
- security-level: for example, certain part of the MIB can be accessed only using authenticated requests, the other only if request is both authenticated and encrypted;
- security-model: for example, SNMPv1 or SNMPv2 messages are not allowed to access SNMPv3 configuration tables;
- user-name: for example, one user can access all objects in the MIB, while another user can access only to a sub-tree (a sub-tree is a set of all objects and object instances that have a common object identifier prefix to their names);
- view-type: for example, a user is allowed to read but not write certain objects;
- context-name: it specifies where an object exists.

VACM does not specify access rights for every single object instance in the MIB, but it specifies access rights per sub-tree; it defines views which are sub-sets of the full MIB tree and access control is available for this views. This is achieved through information stored into the tables indicated in RFC 3415 with "vacmSecurityToGroupTable", "vacmContextTable", "vacmAccessTable", "vacmviewTreeFamilyTable".

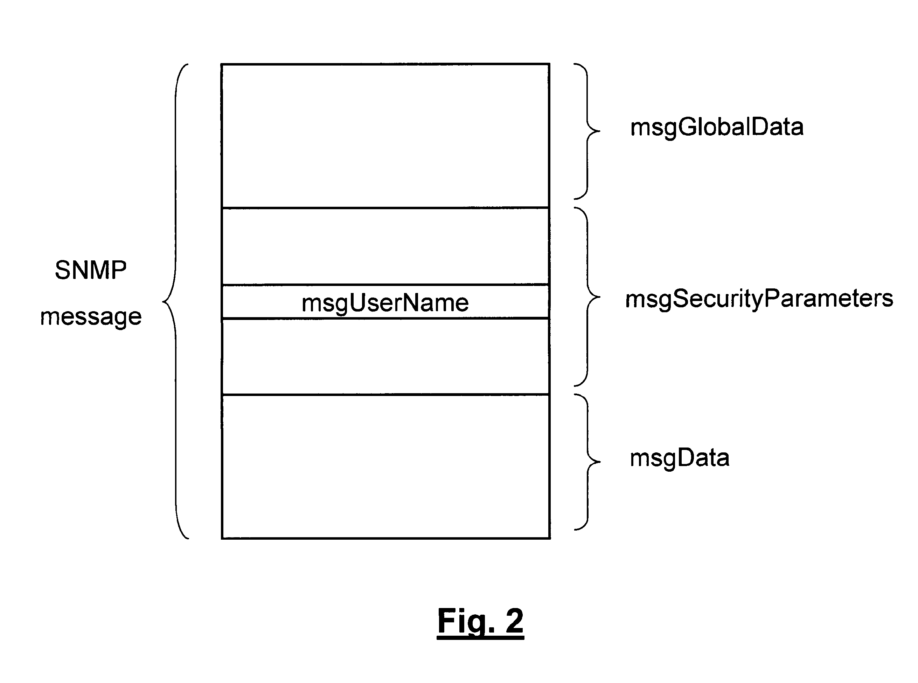

Referring to Fig.2, SNMP message according to version 3 includes three sections:
- msgGlobalData;
- msgSecurityParameters;
- msgData.

The msgGlobalData section is an header including the SNMP version.

The msgSecurityParameters section is used for performing authentication and encryption (USM) and access control (VACM). Specifically, the msgSecurityParameters section includes the msgUserName field, which includes the user identifier required for performing the access control, like it will be explained in details herein after.

The msgData section includes the configuration command (Get, Set, Response,....) and the object instance involved in the configuration command.

Referring to Fig.1, network element NE1 includes Management Information Base MIB1, which includes block USM1 for storing the user identifiers and block VACM1 for storing corresponding rights enabled to perform different types of configurations of network element NE1. Blocks MIB1, USM1 and VACM1 are implemented into the same database, but they can also be implemented into different databases. The same applies for blocks USM2/ VACM2 and USM3/ VACM3 of network elements NE2 and NE3 respectively.

More specifically, VACM1 stores the tables indicated in RFC 3415 with vacmContenxtTable, vacmSecurityToGroupTable, vacmAccessTable, vacmViewTreeFamilyTable; these tables store information of the rights assigned to the users. The same applies for VACM2 and VACM3 of network elements NE2 and NE3 respectively. The Agent in the network elements performs the access control by retrieving the information stored into USM1/VACM1, USM2/ VACM2, USM3/ VACM3 of network elements NE1, NE2, NE3 respectively.

A first example is a first user having USER1 identifier and having rigths only for maintenance, that is the first user is enabled only to read the values of object instances in a Management Information Base, while the first user is not enabled to write any value in the object instances. The Network Management System NMS receives from the first user a request for performing a specific configuration of network element NE1; the Network Management System NMS also receives the USER1 identifier. In fact, the first user controls the GUI and performs a login providing his user identifier (USER1) in the GUI (and, preferably, a corresponding password); afterwards, the first user provides in the GUI the request for performing a specific configuration of a network element. The USER1 identifier and the request is transmitted to the NM Application. Preferably, the request includes the USER1 identifier. In this first example the request of the specific configuration is a request to write a value of an object instance (identified hereinafter with OI1) of MIB1 into network element NE1. The Network Management System transmits in the telecommunication network a SNMP message towards network element NE1: the SNMP message includes USER1 in the msgUserName field and includes a Set command of object instance OI1 in the msgData field (the Set command performs the write). The SNMP message is received by network element NE1, wherein the Agent reads USER1 in the msgUserName field and reads the Set command. The Agent retrieves the user identifiers stored into USM1 and corresponding rights stored into VACM1: in this example, USER1 is assigned to condition (indicated above) user-name and the write request is assigned to view-type. The Agent takes into account user-name=USER1, view-type=write, object-instance=OI1 (and the other conditions), checks if USER1 has the right to perform the write according to the access rights retrieved from VACM1 and rejects the write request (because USER1 is not allowed to perform the write). Preferably, a SNMP message is transmitted from network element NE1 to the Network Management System to notify the unsuccessfull performing of the write.

On the contrary, in case the specific configuration request received at the Network Management System from the first user is to read a value of object instance OI1, the transmitted SNMP message includes a Get command (instead of the Set) of object instance OI1 in the msgData field. The Agent takes into account user-name=USER1, view-type=read, object-instance=OI1 (and the other conditions), checks if USER1 has the right to perform the read according to the access rights retrieved from VACM1 and accepts the read request (because USER1 is allowed to perform the read). In this case, the Agent performs the read: the value of object-instance OI1 is read from MIB1 and this value is transmitted through a SNMP message from network element NE1 to the Network Management System.

A second example is a second user having USER2 identifier and having rigths for administration, that is the second user is enabled both to read and to write values of object instances in a Management Information Base. The Network Management System receives from the second user a request for performing a specific configuration of network element NE1; the Network Management System NMS also receives the USER2 identifier. Preferaly, the request includes the USER2 identifier. In this second example the request of the specific configuration is a request to write a value of object instance OI2 into MIB1 of network element NE1. The Network Management System transmits in the telecommunication network a SNMP message towards network element NE1: the transmitted SNMP message includes in the msgData field a Set of object instance OI2 and the value to write. The Agent takes into account user-name=USER2, view-type=write, object-instance=OI2 (and the other conditions), checks if USER2 has the right to perform the write according to the access rights retrieved from VACM1 and accepts the write request (because USER2 is allowed to perform the write). In this second example, the Agent performs the write: the value is written into object-instance OI2 of MIB1. Preferably, a SNMP message is transmitted from network element NE1 to the Network Management System to acknowledge the successfull performing of the write.

The above solution has the disadvantage to increase the management traffic between the Network Management System and the controlled network elements, but the bandwidth available for carrying management traffic is limited. In fact, the SNMP messages are always transmitted to the network elements and the messages are rejected at the network elements in case the user is not enabled to perform the configuration request.

Moreover, useless management traffic received by the network element can also overload the processing resources in the network elements.

Finally, decrease of the management traffic is required because the management messages can be detected by third parties, thus reducing the network security.

### SUMMARY OF THE INVENTION

The main object of the present invention is to provide a solution for improving control of access to a network element.

The basic idea is to perform the access control at the Network Management System: this is achieved by receiving at the Network Management System a request for performing a specific configuration of a network element, wherein the request includes a user identifier, by checking if the user identifier and corresponding right of the requested specific configuration is included into an information set stored into the Network Management System, wherein the information set includes user identifiers and corresponding rights enabled to perform different types of configurations of at least one of the plurality of network elements and, in case of a positive check at the Network Management System, by transmitting towards the network element a message including a first field indicating the request for performing the specific configuration .

This solution has the advantages to reduce the management traffic between the Network Management System and the network elements, not to overload processing resources in the network elements and to increase the network security.

### BRIEF DESCRIPTION OF THE DRAWINGS

Fig.1 schematically shows control of access to network elements according to the prior art.
Fig.2 schematically shows a SNMP message for performing access control.
Fig.3 schematically shows control of access to network elements according to a first embodiment of the invention.
Fig.4 schematically shows control of access to network elements according to a second embodiment of the invention.

### BEST MODE FOR CARRYING OUT THE INVENTION

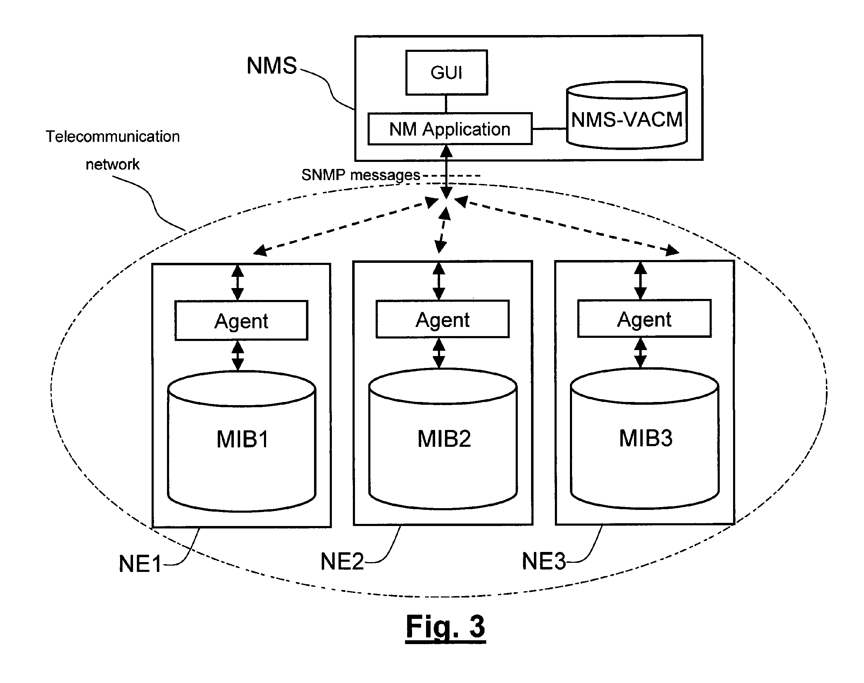

Referring to the first embodiment of the invention of Fig.3, the Network Management System includes a block indicated with NMS-VACM storing an information set required for performing access control in the Network Management System; the prefix NMS stands for Network Management System, for indicating that it is a block in the Network Management System. The NMS-VACM can be a database (or part of a database) storing an information set including user identifiers and corresponding rights enabled to perform different types of configurations of at least one of the network elements controlled by the Network Management System.

The database NMS-VACM in the Network Management System can be a copy of all or part of the MIB for the access control stored into the network elements, that is a copy of all or part of VACM1, VACM2, VACM3 according to RFC 3415 and a copy of all or part of USM1, USM2, USM3 according to RFC 3414.

Alternatevely, information stored into NMS-VACM can be arranged into a more efficient data structure, in order to save memory occupation or to have a more efficient access to the stored information.

Moreover, according to the invention the Network Management Application (still indicated with "NM Application" in Fig.3) is modified in order to include new functionalities for performing the access control, like explained hereinafter.

Access control is performed in the NM Application by retrieving the information stored into database NMS-VACM, according to the following examples of the first embodiment.

A first example is the first user having USER1 identifier and having rigths only for maintenance, that is the first user is enabled only to read the values of object instances in a Management Information Base, while the first user is not enabled to write any value in the object instances.

The Network Management System includes the block NMS-VACM storing an information set indicating the user identifiers (for example, a list of the user identifiers) and corresponding rights enabled to perform different types of configurations of network element NE1; for example, NMS-VACM stores (for the list of user identifiers) the table indicated with "usmUserTable" in RFC 3414 and it stores (for the rights of the user identifiers) the tables of VACM1 described in RFC 3415. Preferably, NMS-VACM also stores the user identifiers and corresponding rights enabled to perform different types of configurations of network elements NE2 and NE3.

The NM Application receives from the first user a request for performing a specific configuration of network element NE1 and it receives the USER1 identifier; preferably, the request includes the USER1 identifier. In this second example, the request of the specific configuration is a request to write a value of an object instance (identified hereinafter with OI1) into MIB1 of network element NE1.

The NM Application receives the USER1 identifier and the write request; moreover, the NM Application retrieves the information stored into database NM-VACM. The NM Application takes into account the USER1 identifier and the write request, it checks if USER1 has the right to perform the write according to the access rights retrieved from NMS-VACM and rejects the write request (because USER1 is not allowed to perform the write). Comparing the first example of the prior art with the first example of the invention, according to the invention the Network Management System does not transmit towards network element NE1 the SNMP message for the configuration request: the management traffic is reduced and the network security is increased.

A second example of the first embodiment is the second user having USER2 identifier and having rigths for administration, that is the second user is enabled both to read and to write values of object instances in a Management Information Base.

The Network Management System includes the block NMS-VACM storing an information set indicating the user identifiers (for example, a list of the user identifiers) and corresponding rights enabled to perform different types of configurations of network element NE1; for example, NMS-VACM stores (for the list of user identifiers) the table indicated with "usmUserTable" in RFC 3414 and it stores (for the rights of the user identifiers) the tables of VACM1 described in RFC 3415.

In this second example, the NM Application receives from the second user a request for performing a specific configuration of network element NE1 and it receives the USER2 identifier; preferably, request includes the USER2 identifier. In this second example, the request of the specific configuration is a request to write a value into object instance OI2 of MIB1 of network element NE1.

The NM Application receives the USER2 identifier and the write request; moreover, the NM Application retrieves the information stored into database NM-VACM. The NM Application takes into account the USER2 identifier and the write request, it checks if USER2 has the right to perform the write according to the access rights retrieved from NMS-VACM and accepts the write request (because USER2 is allowed to perform the write). Afterwards, the Network Management System transmits in the telecommunication network a SNMP message towards network element NE1: the SNMP message includes a Set command of object instance OI2 in the msgData field (the Set command performs the write). The SNMP message is received by network element NE1, wherein the Agent reads the Set command in the msgData field. Finally, the Agent performs the write: the value is written into object-instance O12 of MIB1. Preferably, another SNMP message is transmitted from network element NE1 to the Network Management System to acknowledge the successfull performing of the write.

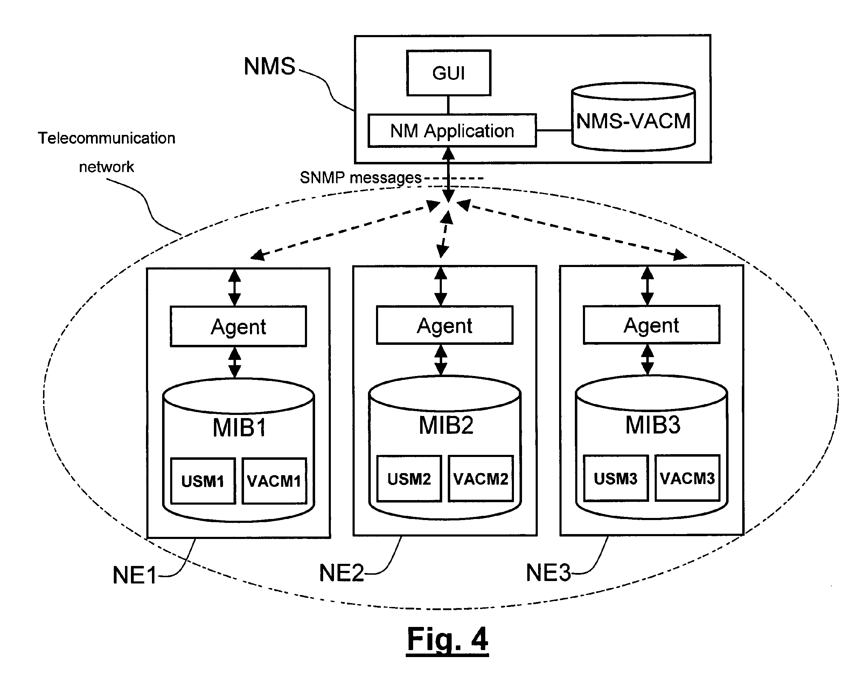

Fig.4 shows a second embodiment of the invention. The Network Management System includes the block NMS-VACM storing information required for performing access control in the Network Management System. Moreover, the network elements also include the blocks storing information required for performing the access control in the network elements: NE1, NE2, NE3 include USM1/ VACM1, USM2/ VACM2, USM3/ VACM3 respectively. Therefore a first access control is performed at the NM Application of the Network Management System and a second access control is performed at the Agent of the network element. This can be required in order to increase the network security.

USM1/ VACM1, USM2/ VACM2, USM3/ VACM3 can be the same MIB indicated in RFC 3414/ 3415; alternatevely, they can be different from the MIB indicated in RFC 3414/ 3415, storing only a sub-set of the information indicated in RFC 3414/ 3415. In this last case, the first access control can be performed on a part of the user rights and the second access control can be performed on another part of the user rights, according to different criteria: for example, the first access control can be performed for the user rights less important for the network security and/or for the user rights generating more management traffic between the Network Management System and the network elements.

According to the second embodiment, wherein USM1 and VACM1 are the MIB described in RFC 3414 and 3415 respectively, and in the case of the second example (USER2 and write) of the invention, the first access control is performed at the NM Application of the Network Management System like explained for the second example of the first embodiment. Moreover, the second access control is performed at the Agent of network element NE1 according to the following steps. The transmitted SNMP message includes the USER2 in the msgUserName field. The message is received by network element NE1, wherein the Agent reads USER2 in the msgUserName field and reads the Set command. The Agent retrieves the user identifiers stored into USM1 and corresponding rights stored into VACM1: in this example, USER2 is assigned to condition user-name and the write request is assigned to view-type. The Agent takes into account user-name=USER2, view-type=write, object-instance=OI2 (and the other conditions), checks if USER2 has the right to perform the write according to the access rights retrieved from VACM1 and accepts the request (because USER2 is allowed to perform the write). Finally, the Agent performs the write: the value is written into object-instance OI2 of MIB1. Preferably, a SNMP message is transmitted from network element NE1 to the Network Management System to acknowledge the successfull performing of the write.

According to a third embodiment of the invention (not shown in the figures), the NM Application can change the user identifier into a super-user identifier (indicated hereinafter with SUPER-USER) having the right to perform any type of configuration of a specific network element (or of a group of network elements).

The Network Management System includes the block NMS-VACM storing an information set including the user identifiers (for example, a list of the user identifiers) and corresponding rights enabled to perform different types of configurations of network element NE1; for example, NMS-VACM stores (for the list of user identifiers) the table indicated with "usmUserTable" in RFC 3414 and it stores (for the rights of the user identifiers) the tables of VACM1 (described in RFC 3415).

A first access control is performed at the Network Management System, like explained in the first embodiment.

Moreover, a second access control is performed at the network element; in fact, the network element includes a functionality for taking into account the SUPER-USER identifier in the received SNMP message. This functionality can be implemented into the Agent which takes into account the msgUserName field in the received SNMP message; in case the Agent reads the SUPER-USER identifier in the msgUserName field, the Agent performs the read or write into the MIB.

Alternatevely, the functionality is implemented like in the second embodiment of the invention, that is the network elements NE1, NE2, NE3 include the blocks USM1/ VACM1, USM2/ VACM2, USM3/ VACM3 respectively (or a sub-set of the information stored into this block), like explained hereinafter.

Referring to the second example (USER2 and write) for the third embodiment, the first access control is performed at the Network Management System, like explained in the first embodiment. Moreover, the NM Application in the Network Management System changes the user identifier USER2 to SUPER-USER. The Network Management System transmits towards network element NE1 an SNMP message including in the msgUserName field the SUPER-USER identifier. The message is received by network element NE1, wherein the Agent reads the SUPER-USER in the msgUserName field and reads the Set command. The Agent retrieves the user identifiers stored into USM1 and corresponding rights stored into VACM1: SUPER-USER is assigned to condition user-name, and the write request is assigned to view-type. The Agent takes into account user-name=SUPER-USER, view-type=write, object-instance=OI2 (and the other conditions), checks if SUPER-USER has the right to perform the write according to the access rights retrieved from VACM1 and accepts the request (because the SUPER-USER is allowed to perform the write). Finally, the Agent performs the write: the value is written into object-instance OI2 of MIB1. Preferably, a SNMP message is transmitted from network element NE1 to the Network Management System to acknowledge the successfull performing of the write.

Comparing the second with the third embodiment (wherein, in the third embodiment, the functionality is implemented into the Agent), the third embodiment has the advantage to require less processing resources (and less processing time) in the network elements, because only the SUPER-USER identifier is taken into account for deciding if to accept or reject the configuration request. The second embodiment has the advantage to increase the network security, because a second access control is performed in the network elements.

The second embodiment has the further advantage to support the access control also in case of a configuration request from an element management station. In fact, the element management station can control only one network element, through a local or a remote connection to the controlled network element, while the Network Management System can control a plurality of network elements (that is, a network). The element management station can not be modified like the Network Management System by including a block (NM-VACM) for the access control and thus the access control can still be performed retrieving the information stored into the blocks (USM1/ VACM1, USM2/ VACM2, USM3/ VACM3) of the network elements.

The invention can be implemented into a Network Management System for controlling access to a plurality of network elements. The Network Management System includes:
- storing means adapted to store an information set indicating rights of user identifiers and corresponding rights enabled to perform different types of configurations of at least one of the plurality of network elements;
- means adapted to receive a request for performing a specific configuration of a network element, the request including a user identifier;
- means adapted to check if right of the user identifier and corresponding right of the requested specific configuration is included into the information set in the storing means;
- means adapted to transmit a message including a first field indicating the request for performing the specific configuration, in case of a positive check.

The invention can be implemented into a Telecommunications system comprising:
- a Network Management System for controlling access to a plurality of network elements, the Network Management System including;
   - first storing means adapted to store an information set indicating user identifiers and corresponding rights enabled to perform different types of configurations of at least one of the plurality of network elements;
   - means adapted to receive a request for performing a specific configuration of a network element, the request including a user identifier;
   - first means adapted to check if the user identifier and corresponding right of the requested specific configuration is included into the information set in the first storing means;
   - means adapted to transmit, in case of a positive check at the first means, a message including a first field indicating the request for performing the specific configuration and including a second field indicating the user identifier;
- a network element including:
   - second storing means adapted to store another information set indicating user identifiers and corresponding rights enabled to perform different types of configurations of the network element;
   - means adapted to receive the message and to read therefrom the request for performing the specific configuration in the first field and to read therefrom the user identifier in the second field;
   - second means adapted to check if the user identifier in the second field of the received message and the right of the requested specific configuration is included into the other information set stored into the second storing means and adapted to perform, in case of a positive check at the second means, the specific configuration of the network element.

The invention can be implemented into a Graphic User Interface for controlling access to a plurality of network elements. The graphic user interface includes a window for receiving a request for performing a specific configuration of a network element, wherein the request includes a user identifier; the window displays a menu for performing the specific configuration of the network element if the user identifier has a right enabled to perform the specific configuration of the network element. For example, if the user identifier has right only to read object instances from the MIB in a network element, the window will not display the menu for writing, but only the menu for reading.

The method according to the invention can be performed through a software program running on hardware of a Network Management System; the software program can be recorded on a computer readable medium. The management station can be a workstation, a personal computer or a server; the hardware can be a processor. The programming language of the software program can be for example C, C++ or Java. The software program performs the steps of:
- receiving at the Network Management System a request for performing a specific configuration of a network element, the request including a user identifier;
- checking if the user identifier and corresponding right of the requested specific configuration is included into an information set stored into the Network Management System, the information set including user identifiers and corresponding rights enabled to perform different types of configurations of at least one of the plurality of network elements; and
- in case of a positive check at the Network Management System, transmitting towards the network element a message including a first field indicating the request for performing the specific configuration.

## Claims

1. Method for controlling access to a plurality of network elements (NE1, NE2, NE3) through a Network Management System (NMS), the method including the step of:
- receiving at the Network Management System a request for performing a specific configuration of a network element (NE1), the request including a user identifier;
**characterized in that** the method further includes the steps of:
- checking (NM Application) if the user identifier and corresponding right of the requested specific configuration is included into an information set (NMS-VACM) stored into the Network Management System, the information set including user identifiers and corresponding rights enabled to perform different types of configurations of at least one of the plurality of network elements; and
- in case of a positive check at the Network Management System, transmitting towards the network element (NE1) a message including a first field (msgData) indicating the request for performing the specific configuration.

2. Method according to claim 1, the method further including the steps of:
- receiving the message at the network element and reading therefrom the request for performing the specific configuration in the first field;
- performing the specific configuration of the network element.

3. Method according to claims 1 or 2, the method including the steps of:
- transmitting the message further including a second field (msgUserName) indicating the user identifier;
- receiving the message at the network element and further reading therefrom the user identifier in the second field;
- checking (Agent) if the user identifier in the second field of the received message and right of the requested specific configuration is included into another information set stored into the network element, the other information set including user identifiers and corresponding rights enabled to perform different types of configurations of the network element;
- in case of a positive check at the network element, performing the specific configuration of the network element.

4. Method according to claims 1 or 2, the method including the steps of:
- transmitting the message further including a second field (msgUserName) indicating a super-user identifier enabled to perform any type of configuration of the network element;
- receiving the message at the network element and further reading therefrom the second field;
- in case of reading the super-user identifier in the second field, performing the specific configuration of the network element.

5. Method according to claims 1 or 2, the method including the steps of:
- transmitting the message further including a second field (msgUserName) indicating a super-user identifier enabled to perform any type of configuration of the network element;
- receiving the message at the network element and further reading therefrom the super-user identifier in the second field;
- checking (Agent) if the super-user identifier in the second field of the received message is included into another information set stored into the network element, the other information set including user identifiers and corresponding rights enabled to perform different types of configurations of the network element;
- in case of a positive check at the network element, performing the specific configuration of the network element.

6. Network Management System (NMS) for controlling access to a plurality of network elements, **characterized in that** the Network Management System includes:
- storing means (NMS-VACM) adapted to store an information set indicating user identifiers and corresponding rights enabled to perform different types of configurations of at least one of the plurality of network elements;
- means adapted to receive a request for performing a specific configuration of a network element, the request including a user identifier;
- means adapted to check (NM Application) if the user identifier and corresponding right of the requested specific configuration is included into the information set in the storing means;
- means adapted to transmit a message including a first field indicating the request for performing the specific configuration, in case of a positive check.

7. Telecommunications system comprising:
- a Network Management System (NMS) for controlling access to a plurality of network elements, the Network Management System including;
• first storing means (NMS-VACM) adapted to store an information set indicating user identifiers and corresponding rights enabled to perform different types of configurations of at least one of the plurality of network elements;
• means adapted to receive a request for performing a specific configuration of a network element, the request including a user identifier;
• first means (NM Application) adapted to check if the user identifier and corresponding right of the requested specific configuration is included into the information set in the first storing means;
• means adapted to transmit, in case of a positive check at the first means, a message including a first field indicating the request for performing the specific configuration and including a second field indicating the user identifier;
- a network element including:
• second storing means (USM1, VACM1) adapted to store another information set indicating user identifiers and corresponding rights enabled to perform different types of configurations of the network element;
• means adapted to receive the message and to read therefrom the request for performing the specific configuration in the first field and to read therefrom the user identifier in the second field;
• second means (Agent) adapted to check if the user identifier in the second field of the received message and the right of the requested specific configuration is included into the other information set stored into the second storing means and adapted to perform, in case of a positive check at the second means, the specific configuration of the network element.

8. Graphic user interface (GUI) for controlling access to a plurality of network elements, the graphic user interface including a window for receiving a request for performing a specific configuration of a network element, the request including a user identifier, **characterized in that** the window displays a menu for performing the specific configuration of the network element if the user identifier has a right enabled to perform the specific configuration of the network element.

9. Computer program comprising computer program code means adapted to perform the steps of receiving, checking and transmitting of the method according to claim 1 when said program is run on a computer.

10. Computer readable medium having a program recorded thereon, said computer readable medium comprising computer program code means adapted to perform the steps of receiving, checking and transmitting of the method according to claim 1 when said program is run on a computer.
